# EUROPEAN PATENT APPLICATION

(11) **EP 1 932 571 A1**
(43) Date of publication of application: **18.06.2008**
(21) Application number: 06797784.3
(22) Date of filing: 11.09.2006
(51) Int. Cl.: A63F 13/00, A63F 13/10

(54) **GAME DEVICE, GAME SYSTEM, AND GAME SYSTEM EFFECT SOUND GENERATION METHOD**

(30) Priority: 09.09.2005 JP 2005261651
(71) Applicant: Kabushiki Kaisha Sega doing business as Sega Corporation, Tokyo 144-8531 (JP)
(72) Inventor: TOKUHARA, Jun c/oSEGA K.K. doing business as SEGA Corp., Tokyo 144-8531 (JP)
(74) Representative: Treeby, Philip David William
(86) International application number: PCT/JP2006/317958
(87) International publication number: WO 2007/029856

(57) **Abstract**

It is an object of the invention to generate sound effects based on a behavior of an operated object and of a non-operated object as distinguished between them by assigning an identifier to each object. A game device includes sound effect generating means which generates sound effects based on the behavior of the operated object and of the non-operated object. The sound effect of the operated object is generated by changing the sound effect serving as a reference according to the behavior of the operated object so as to have a different waveform from a waveform of the sound effect serving as a reference according to the behavior of the non-operated object.

## Description

### Technical Field

The present invention relates to a game device, a game system, and a method of generating a sound effect of the game system, and more particularly to an improvement of a generation method of a sound effect generated based on a behavior of each character when a game is played with the images of a plurality of characters displayed on a screen.

### Background Art

In a conventional game device such as a video game player, to apply a sound effect depending on a character operated by each player when a game is played among a plurality of players, an identifier is assigned to each character and a loudspeaker outputs a sound effect modulated according to the identifier of each character when generating the sound effect based on a behavior of each character.

### Disclosure of the Invention

### Problem to be Solved by the Invention

When generating a sound effect for each character, it is preferable to generate a sound effect serving as a reference sound which is an original sound that has been originally assumed for each character. Since a conventional game device is equipped with only one loudspeaker, a game device not having a communication device can generate the reference sound for an operated object, which is a character operated by a player concerned among the plurality of players, or a sound effect changed to have a different waveform according to the identifier. The game device, however, cannot generate, for the character operated by the player, a sound effect having a different waveform from a waveform of the sound effect of a character operated by another player from the loudspeaker of the game device operated by the player. Moreover, even if having the communication device, the game device has not employed a system in which a sound effect depends on an operated character.

Therefore, it is an object of the present invention to provide a game device and a signal processing method capable of generating a sound effect based on a behavior of an operated object and of a non-operated object as distinguished from each other.

### Means to Solve the Problem

In order to achieve the above object, the present invention includes: a memory which stores information resources for an electronic game; an input device which accepts an input for determining an operated object operated by a user and a behavior of the operated object in response to the user's operation; an information receiving circuit which receives information on an operated object operated by a user other than the user as information on a non-operated object via communication; sound effect generating means which generates sound effects based on the behavior of the operated object and of the non-operated object; a loudspeaker which outputs the sound effects; a display control circuit which performs a control of displaying the operated object and the non-operated object on a screen of the display device; and an image processing circuit which generates image information for the electronic game on the basis of the information resources stored in the memory and displays the generated image information on the display device, wherein the sound effect generating means generates a sound effect changed to have a different waveform from a waveform of the sound effect based on the behavior of the operated object as the sound effect based on the behavior of the non-operated object.

According to the present invention, the sound effects based on the behavior of the operated object and of the non-operated object are generated as distinguished from each other, and therefore a player can distinguish the behavior of the operated object operated by the player from the behavior of the non-operated object operated by another player by means of a difference in the sound effect.

Furthermore, to generate the sound effect having a waveform different from the waveform of the sound effect based on the behavior of the non-operated object as the sound effect based on the behavior of the operate object, it is only necessary to change the pitch or frequency of the waveform of the sound effect.

In a game system, which can be used by a plurality of users, having a plurality of game devices communicating information among them, the sound effect generating means of each game device can generate the sound effect based on the behavior of the non-operated object from the waveform different from the waveform of the sound effect based on the behavior of the operated object.

Furthermore, according to the present invention, in a game system which has a plurality of game devices, transmits or receives information among the game devices, allows a plurality of users to play a game, and causes function setting means to set the functions of the game devices, there is provided a method of generating a sound effect of the game system, wherein the function setting means performs a process of setting one of the plurality of game devices to be a master device and setting other game devices to be slave devices, wherein the sound effect generating means of the game device set to be the master device performs a process of generating a sound effect unmodulated with respect to a reference sound as a sound effect of the operated object operated by a user who operates the game device and a process of generating a sound effect modulated with respect to the reference sound as a sound effect of the non-operated object transmitted from the game device set to be the slave device, and wherein the sound effect generating means of the game device set to be the slave device performs a process of generating a sound effect unmodulated with respect to the reference sound as the sound effect of the operated object operated by the user who operates the game device and a process of generating a sound effect modulated with respect to the reference sound as the sound effect of the non-operated object transmitted from the game device set to be the master device or one of other game devices set to be the slave devices.

### Effect of the Invention

According to the present invention, it is possible to provide a game device and game system which allows a user to distinguish between a behavior of an operated object operated by the user and a behavior of a non-operated object operated by another user by means of a sound effect.

### Brief Description of the Drawings

Fig. 1 is a block diagram illustrating a game device according to the present invention;
Fig. 2 is a block diagram illustrating a graphic controller for a main monitor, a graphic controller for a monitor on an operating unit, and a CPU;
Fig. 3 is a block diagram illustrating a game system;
Fig. 4 is a diagram illustrating a screen from the point of view of a character 1 operated by a player 1, showing a display example of a screen that appears at the moment when a punch of the character 1 hits a character 2;
Fig. 5 is a diagram illustrating a screen from the point of view of the character 2 operated by a player 2, showing a display example of a screen that appears at the moment when the character 2 is punched by the character 1;
Fig. 6 is a diagram illustrating a display example of a screen on which four characters are displayed;
Fig. 7 is a diagram illustrating a screen of the game device applied to a race game, showing a display example of a screen that appears when four characters race;
Fig. 8 is a flowchart for explaining an identifier setting process of the game device; and
Fig. 9 is a flowchart for explaining a method of generating a sound effect.

### Description of Reference Numbers

- 2: Main monitor
- 3: Monitor on operating unit
- 4: Touch panel
- 5: Operation button
- 6: Loudspeaker
- 7: Control unit
- 8: External storage medium
- 71: CPU
- 74: Graphic controller for main monitor
- 75: Graphic controller for monitor on operating unit
- 76: Sound controller
- 77: Communication interface

### Best Mode for Carrying out the Invention

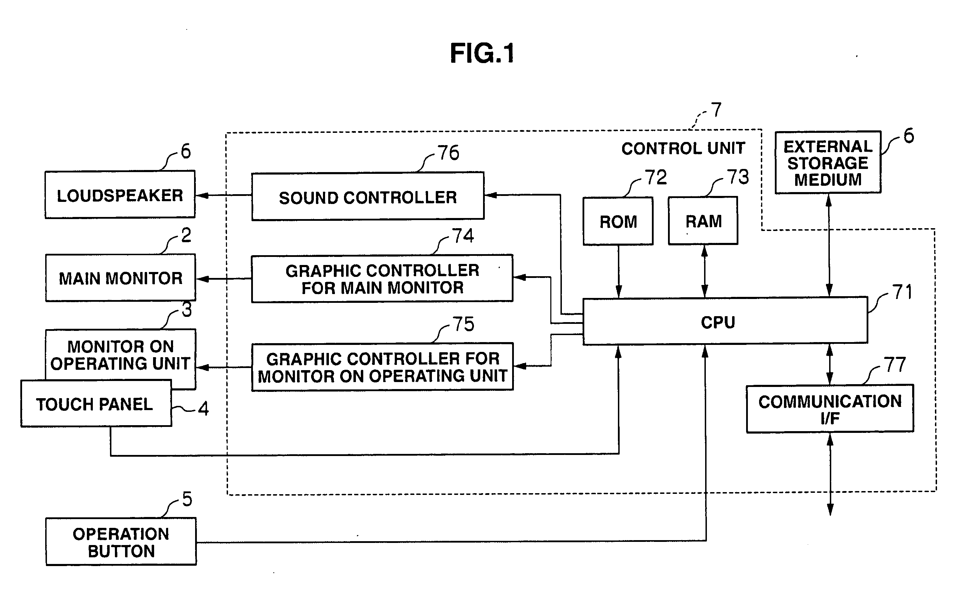

Preferred embodiments of the present invention will now be described hereinafter with reference to accompanying drawings. Referring to Fig. 1, there is shown a block diagram of a game device according to the present invention. In Fig. 1, a game device 100 includes: a main monitor 2 as a display device which displays a game image; a monitor on an operating unit 3 which displays an image in response to a user's operation; a touch panel 4 and an operation button 5 as input devices each of which accepts an input for determining an operated object (character) and a behavior of the operated character based on a user's operation; a loudspeaker 6 which outputs a sound effect based on the behavior of the operated object (character); a control unit 7 which controls the image display on the main monitor 2 or the monitor on the operating unit 3 and controls the drive of the loudspeaker 6 in response to a signal from the touch panel 4 or the operation button 5; and an external storage medium (memory) 8 which stores a game program or data (including video or music data) as information resources for an electronic game.

The control unit 7 includes: a CPU 71 as an image processing circuit which executes a game program stored in the external storage medium 8, controls the entire system, and generates image information based on information resources; a RAM 73 which stores a program and data necessary for the CPU 71 to perform processing; a ROM 72 which stores a program and data necessary to start up the game device 100; a communication interface 77 as an information receiving circuit which transmits or receives information to or from other game devices and receives, for example, information on an operated object operated by another user as information on a non-operated object (non-operated character) via communication; a sound controller 76 as sound effect generating means which generates sound effects based on a behavior of the operated object and of the non-operated object; a graphic controller for the main monitor 74 as a display control circuit which performs a control for displaying the operated object and the non-operated object on the screen of the main monitor 2; and a graphic controller for the monitor on the operating unit 75 which performs a control for displaying an image on the screen of the monitor on the operating unit 3.

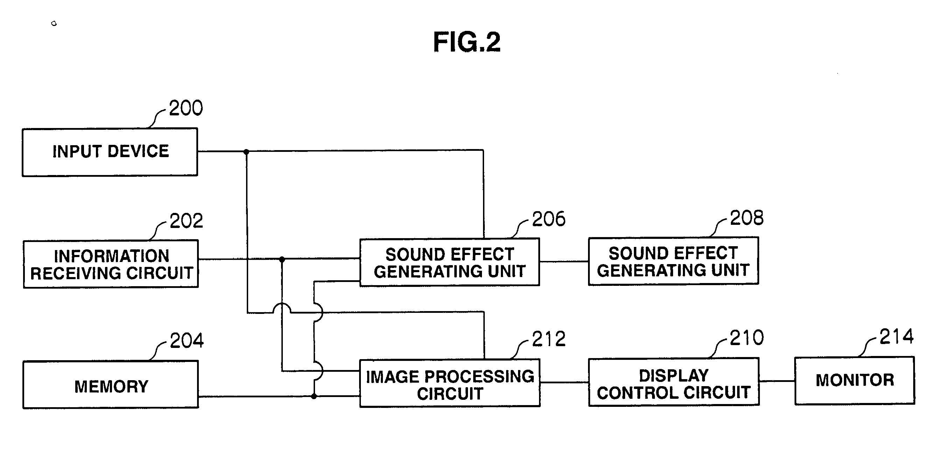

The functional block diagram of the operations of the graphic controller for the main monitor 74, the graphic controller for the monitor on the operating unit 75, and the CPU 71 is as shown in Fig. 2. The functional block diagram in Fig. 2 includes an operation button data input device 200, a receiving circuit 202 which receives radio data from other game devices, and a sound effect generating unit 206. The sound effect generating unit generates a sound effect of the operated object and of the non-operated object based on the information from these blocks. A reference numeral 212 designates an image processing circuit, which generates an image including the operated object and the non-operated object based on data from the input device 200, the information receiving circuit 202, and the memory 204 and outputs the image to a display control circuit 210, by which the display image is output to a monitor 214.

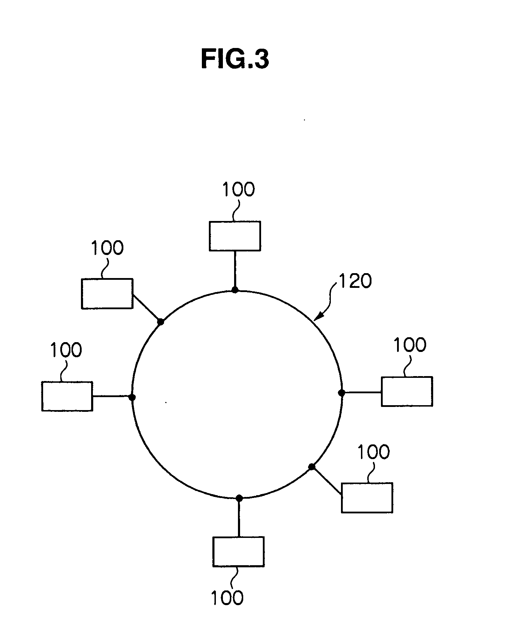

In the case where a game is played among a plurality of users (players) using a plurality of game devices 100, the game can be played among the users by connecting the plurality of game devices 100 to each other via a communication network 120 as shown in Fig. 3 and transmitting or receiving data among the game devices 100. In this case, the CPU 71 in each game device 100 functions also as a data processor which receives control signals from the operation button 5 and the touch panel 4 operated by each user via the communication network 120, processes data for an electronic game on the basis of the received operation data and game program, and performs processing for outputting a result of the processing. Additionally, the communication among the game devices 100 can be performed through a server and also without passing through a server.

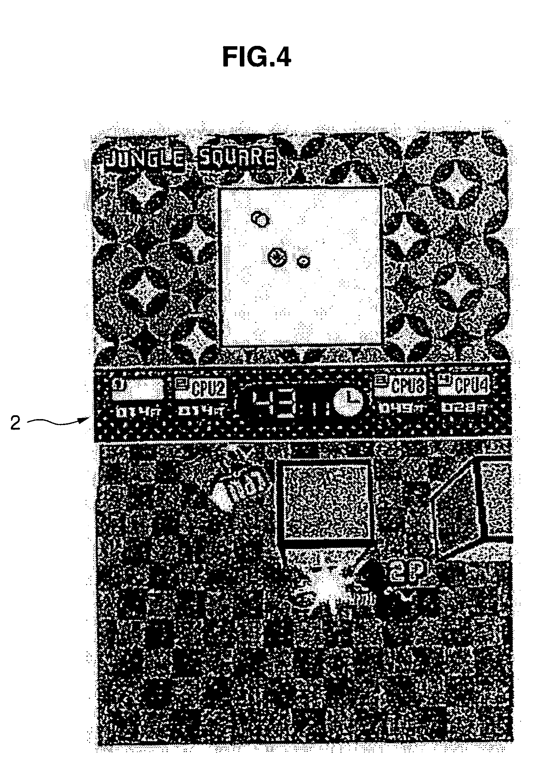

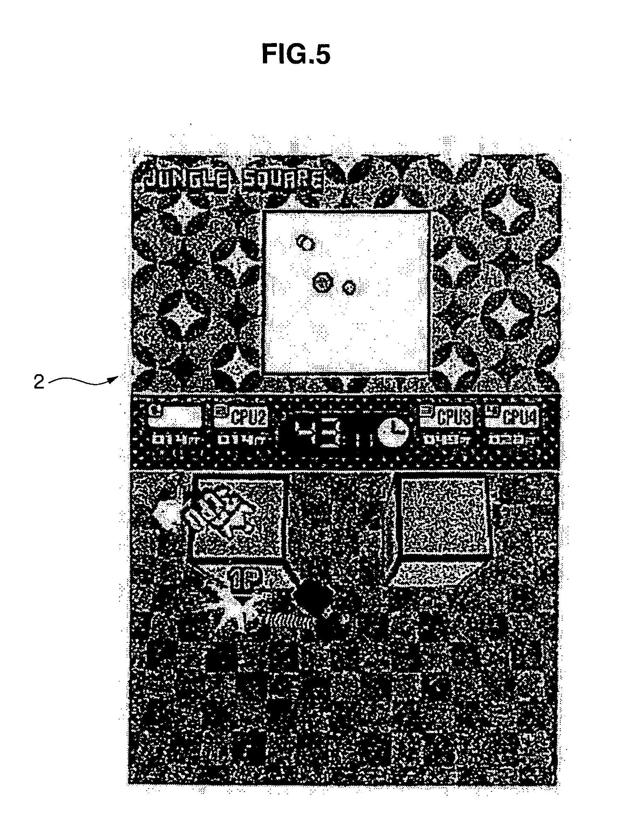

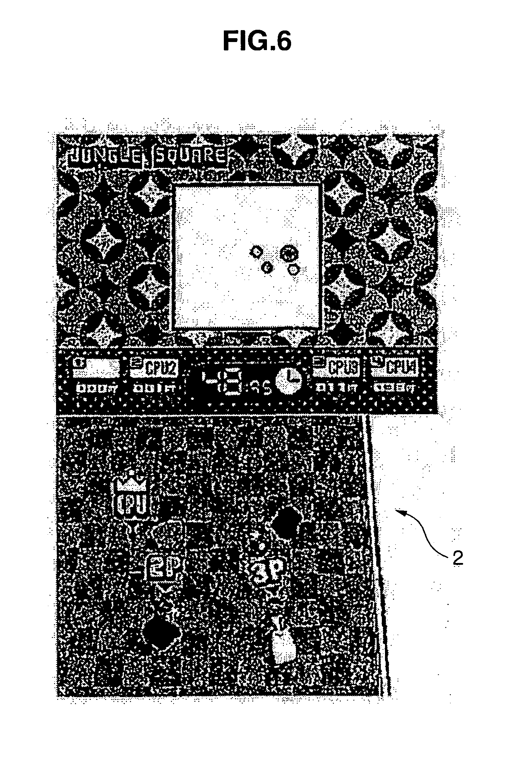

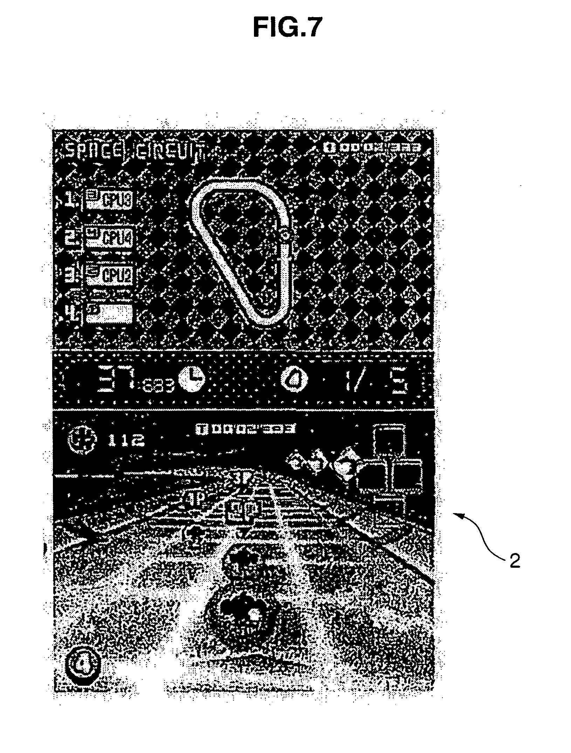

Fig. 4 to Fig. 7 each illustrate a screen displayed on the main monitor 2. The screen 130 displays a player character (operated object) 10, which is operated by a user (player 1) who uses the game device 100, and a non-operated object (non-operated character) 12, which is operated by another user (player 2) who operates a game device connected to the game device 100 via a communication line. Referring to Fig. 4, there is shown a screen from the point of view of a character 1 operated by the player 1, showing a screen that appears at the moment when a punch of the character 1 hits a character 2. Referring to fig. 5, there is shown a screen from the point of view of the character 2 operated by the player 2, showing a screen that appears at the moment when the character 2 is punched by the character 1. Referring to Fig. 6, there is shown a screen on which four characters (character 1 to character 4) are displayed. Referring to Fig. 7, there is shown a screen of the game device applied to a race game, showing a display example of a screen that appears when four characters (the character 1 to the character 4) race.

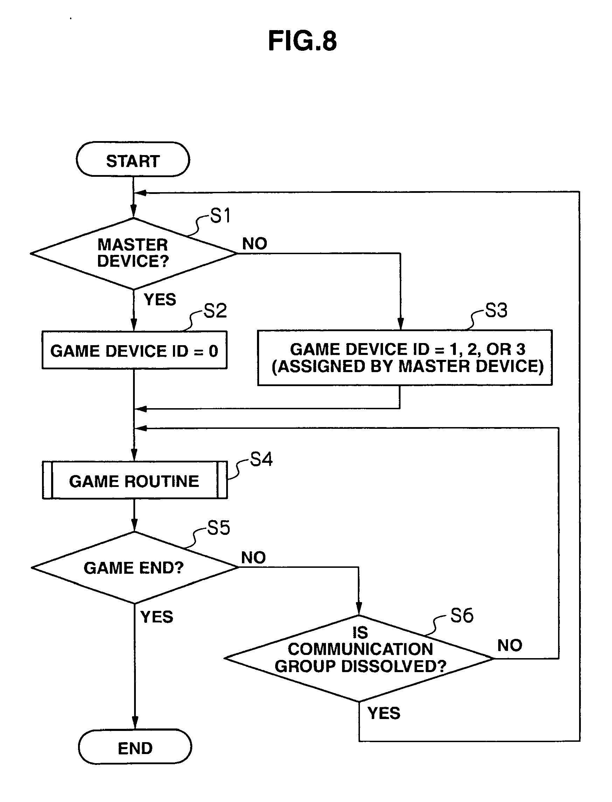

The following describes a process that the game device performs in a situation where three players as users have a game against each other, with reference to a flowchart shown in Fig. 8.

First, before starting the game played by the plurality of players, function setting means (for example, the CPU 71 of the game device 100 to be a master device) performs a process of causing one of the plurality of game devices 100 to be the master device and causing other remaining game devices 100 to be slave devices in order to set the functions of the plurality of game devices 100. In this case, an identifier is assigned to each game device 100 according to whether the game device is the master device or the slave device. On such an occasion as this, the players can enjoy the game played using many characters, even if there are only a few players, by adding a character operated by a computer to all characters operated by the plurality of players. In this example, a character 4 is treated as one operated by the computer. Therefore, a player who operates the character 4 does not exist. Thus, in this case, ID#3 as a game device identifier is not assigned to the game device to be operated by the fourth player (player 4) under ordinary circumstances.

When assigning the identifier, information is transmitted or received between the game devices 100 through a process of the specific CPU 71 and it is determined whether each game device 100 is the master device (step S1): if the game device 100 used by the player 1 is the master device, a communication ID number #0 (boss) is set as an identifier of the game device 100 (step S2). On the other hand, unless the game devices 100 used by the players 2 and 3 are each determined to be the master device, a communication ID number #1 (follower) is set as an identifier of the game device 100 used by the player 2 and a communication ID number #2 is set as an identifier of the game device 100 used by the player 3 (step S3).

After completion of the identifier setting, the control progresses to a game routine (step S4) and then determines whether the game ends (step S5): unless the game ends, it is determined whether to dissolve the communication group for transmitting or receiving information among the game devices 100 (step S6). If there is no need to dissolve the communication group, the control returns to the process of step S4 to continue the game. If there is a need to dissolve the communication group, the control returns to the process of step S1 to repeat the processes of steps S1 to S5. Then, when the game ends, the process in this routine is terminated. Note that the communication ID number of each game device 100 is maintained until the communication group is dissolved.

On the other hand, a "play select screen" appears when each game device 100 is started in the game routine, and the user selects one of "Play on your own" (non-communication play), "Play with all players" (communication play), and "Option" (detailed settings) from the "play select screen," whereby the game is progressed through the process of the CPU 71.

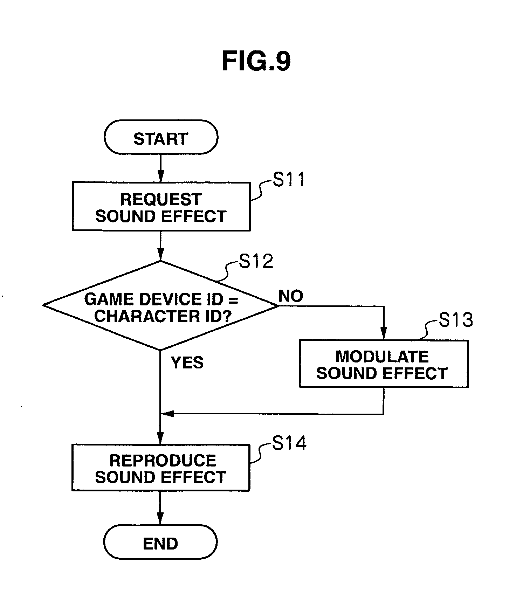

In the case where it is necessary to generate a sound effect along with a behavior of each character during the progression of the game, a request for generating a sound effect is entered into each CPU 71 (step S11) as shown in Fig. 9, and each CPU 71 determines whether the identifier of the subject game device 100 corresponding to the CPU 71 concerned matches the character ID (step S12). More specifically, the CPU 71 determines whether it is required to generate a sound effect associated with a behavior of the operated character (operated object) operated (specified) by the player who uses the subject game device 100 corresponding to each CPU 71. If determining that it is required to generate a sound effect associated with a behavior of the non-operated character operated (specified) by another player or the computer, the CPU 71 performs a process of, for example, modulating a sound effect (step S13) in order to generate a sound effect having a different waveform (changed in the waveform) from that of the sound effect associated with the behavior of the operated character operated by the player who uses the subject game device 100, generates a sound effect associated with the behavior of the non-operated character operated (specified) by another player or the computer based on a result of the process, and outputs the sound effect from the loudspeaker 6 (step S14). In this step S14, the sound effect associated with the behavior of the operated character operated by the player who uses the subject game device 100 corresponding to the CPU 71 is generated and the sound effect is output from the loudspeaker 6 as a process performed after it is determined that it is required to generate the sound effect associated with the behavior of the operated character operated by the player who uses the subject game device 100 corresponding to the CPU 71 in step S12. For example, a sound effect to be an original sound, which is intended by a developer, is generated and the generated sound effect is output from the loudspeaker 6.

As a method of modulating the sound effect, there are method A of varying the modulated value according to the identifier assigned to each player and method B of fixing the modulated value independently of the identifier value assigned to each player, for example.

If the method A is employed, the sound effect generated along with a behavior of a character other than the non-operated character varies according to the identifier assigned to the player, and therefore the player can know how and which ID character acts only by hearing the sound effect. In this case, the number of patterns of the modulation process increases and therefore the software processing speed slows down.

On the other hand, if the method B is employed, it is possible to cope with such a case that, for example, the number of identifiers is 10000 or the like, which is too many to modulate the values completely. Since, however, there are only two types of sound effects: one is for an operated character corresponding to each player and the other is for a non-operated character operated by another player or the computer, it is impossible to determine how and which ID character acts only by means of sound discrimination.

If the method A is employed and it is assumed that the character 1 operated by the player 1 attacks the character 2 operated by the player 2 and thereby the character 2 is damaged, the loudspeaker 6 of the player 1 who operates the character 1 outputs an aggressive sound effect, which is not modulated (unmodulated) with respect to a reference sound for the attack of the character 1. On the other hand, for the damage to the character 2 operated by the player 2, the sound effect is modulated according to the identifier corresponding to the character 2, and the loudspeaker 6 of the player 1 outputs a damage sound modulated by +1 point with respect to the reference sound.

Then, the loudspeaker 6 in the game device 100 of the player 2 outputs an aggressive sound effect, which is modulated by +2 points with respect to the reference sound when the character 1 operated by the player 1 attacks the character 2 operated by the player 2. On the other hand, the loudspeaker 6 of the player 2 outputs a damage sound, which is not modulated with respect to the reference sound, for the damage to the character 2 operated by the player 2.

Furthermore, the loudspeaker 6 in the game device 100 of the player 3 outputs an aggressive sound effect modulated by -1 point with respect to the reference sound for the attack of the player 1 when the character 1 operated by the player 1 attacks the character 2 operated by the player 2. On the other hand, for the damage to the character 2 operated by the player 2, the loudspeaker 6 of the player 3 outputs a damage sound modulated by +2 points with respect to the reference sound. The following Table 1 shows a relationship between each game device 100 and each character in a communication using three game devices regarding sound generation during the communication among four characters when the method A is employed, where the game device 100 used by the player 1 (person A) who operates the character 1 is the master device (ID#0), the game device 100 used by the player 2 (person B) who operates the character 2 is a slave device 1 (ID#1), the game device 100 used by the player 3 (person C) who operates the character 3 is a slave device 2 (ID#2), and the computer operates the character 4.

**[Table 1]**

| Character | Character 1 | Character 2 | Character 3 | Character 4 |
|---|---|---|---|---|
| Operator | Person A | Person B | Person C | Computer |
| Operator's housing | Housing of ID#0 | Housing of ID#1 | Housing of ID#2 | (None) |

Moreover, with the reference sound assumed to be "Do" sound regarding the sound effect of each character, Table 2, Table 3, and Table 4 show an example of the master device, an example of the slave device 1, and an example of the slave device 2, respectively, as the states of sound effects generated in the game devices 100.

**[Table 2]**

| Character | Character 1 | Character 2 | Character 3 | Character 4 |
|---|---|---|---|---|
| Difference from reference sound | ±0 | +1 | -1 | +2 |
| Actual sound | Do | Re | Ti | Mi |

**[Table 3]**

| Sound generation in housing of ID#1 | | | | |
|---|---|---|---|---|
| Character | Character 1 | Character 2 | Character 3 | Character 4 |
| Difference from reference sound | +2 | +0 | +1 | -1 |
| Actual sound | Mi | Do | Re | Ti |

**[Table 4]**

| Sound generation in housing of ID#2 | | | | |
|---|---|---|---|---|
| Character | Character 1 | Character 2 | Character 3 | Character 4 |
| Difference from reference sound | -1 | +2 | ±0 | +1 |
| Actual sound | Ti | Mi | Do | Re |

Subsequently, if the method B is employed and it is assumed that the character 1 operated by the player 1 attacks the character 2 operated by the player 2 and the character 2 operated by the player 2 is damaged, the loudspeaker 6 of the game device 100 of the player 1 outputs an aggressive sound effect, which is not modulated with respect to the reference sound, for the attack by the character 1 operated by the player 1. On the other hand, for the damage by the attack of the character 1 operated by the player 1 to the character 2 operated by the player 2, the loudspeaker 6 of the player 1 outputs a damage sound modulated with respect to the reference sound.

Then, the loudspeaker 6 in the game device 100 of the player 2 outputs an aggressive sound effect, which is modulated with respect to the reference sound in response to the attack by the character 1 operated by the player 1. On the other hand, the loudspeaker 6 of the player 2 outputs a damage sound, which is not modulated with respect to the reference sound, for the damage to the character 2 operated by the player 2.

Furthermore, the loudspeaker 6 in the game device 100 of the player 3 outputs an aggressive sound effect modulated with respect to the reference sound for the damage to the character 2 when the character 1 operated by the player 1 attacks the character 2 operated by the player 2. On the other hand, for the damage to the character 2 operated by the player 2 when the character 1 operated by the player 1 attacks the character 2 operated by the player 2, the loudspeaker 6 of the player 3 outputs a damage sound modulated with respect to the reference sound. The following Table 5 shows a relationship between each game device 100 and each character in a communication using three game devices regarding sound generation during the communication among four characters, where the game device 100 used by the player 1 (person A) who operates the character 1 is the master device (ID#0), the game device 100 used by the player 2 (person B) who operates the character 2 is a slave device 1 (ID#1), the game device 100 used by the player 3 (person C) who operates the character 3 is a slave device 2 (ID#2), and the computer operates the character 4.

**[Table 5]**

| Character | Character 1 | Character 2 | Character 3 | Character 4 |
|---|---|---|---|---|
| Operator | Person A | Person B | Person C | Computer |
| Operator's housing | Housing of ID#0 | Housing of ID#1 | Housing of ID#2 | (None) |

Moreover, with the reference sound assumed to be "Do" sound regarding the sound effect of each character, Table 6, Table 7, and Table 8 show an example of the master device, an example of the slave device 1, and an example of the slave device 2, respectively, as the states of sound effects generated in the game devices 100.

**[Table 6]**

| Character | Character 1 | Character 2 | Character 3 | Character 4 |
|---|---|---|---|---|
| Difference from reference sound | ±0 | +1 | +1 | +1 |
| Actual sound | Do | Re | Re | Re |

**[Table 7]**

| Sound generation in housing of ID#1 | | | | |
|---|---|---|---|---|
| Character | Character 1 | Character 2 | Character 3 | Character 4 |
| Difference from reference sound | +1 | ±0 | +1 | +1 |
| Actual sound | Re | Do | Re | Re |

**[Table 8]**

| Sound generation in housing of ID#2 | | | | |
|---|---|---|---|---|
| Character | Character 1 | Character 2 | Character 3 | Character 4 |
| Difference from reference sound | +1 | +1 | ±0 | +1 |
| Actual sound | Re | Re | Do | Re |

As a conventional example, Table 9 shows relationships between players (persons A, B, and C) and characters 1 to 4, with only one screen and one loudspeaker provided, when three persons play the game using four characters of the characters 1, 2, and 3 operated by the players and the character 4 operated by the computer.

**[Table 9]**

| Character | Character 1 | Character 2 | Character 3 | Character 4 |
|---|---|---|---|---|
| Operator | Person A | Person B | Person C | Computer |
| Operator's housing | Common | Common | Common | (None) |

Moreover, with the reference sound assumed to be "Do" sound regarding the sound effects of the characters 1 to 4 in the conventional example, Table 10 shows the states of sound effects generated for the characters 1 to 4.

**[Table 10]**

| Character | Character 1 | Character 2 | Character 3 | Character 4 |
|---|---|---|---|---|
| Difference from reference sound | +0 | +1 | -1 | +2 |
| Actual sound | Do | Re | Ti | Mi |

While the sound effect is modulated as the sound effect based on the behavior of the operated character when generating the sound effect changed to have a different waveform from that of the sound effect based on the behavior of the non-operated character in this embodiment, alternatively it is possible to generate a sound effect changed in pitch to have a different pitch or a sound effect changed in frequency to have a different frequency, instead of modulating the sound effect.

According to this embodiment, it is possible to generate a sound effect, which is to be an original sound intended by a manufacturer, as a sound effect based on the behavior of the operated character (operated object) during the game play, and to generate a sound effect different from the original sound as a sound effect based on a behavior of the non-operated character (non-operated object).

Furthermore, according to this embodiment, the sound effects are generated with distinction between the sound effect based on the behavior of the operated character (operated object) and the sound effect based on the behavior of the non-operated character (non-operated object) during the game play, and therefore a player can know the behavior of the operated character (operated object) operated by the player in distinction from a behavior of the non-operated character (non-operated object) operated by another player.

Additionally, the non-operated objects for one user can be divided into objects operated by other users and those operated by a computer. If only one player plays the game, the non-operated objects are operated by the computer and the operated object operated by the player is controlled with the sound effect having a waveform of the original reference sound while the operated objects operated by the computer are controlled with the sound effect changed in the waveform from the original reference sound. Furthermore, while the game is played among the plurality of players via a wireless LAN in the above embodiment, the present invention is not limited thereto, but may be variously embodied to include two or more input-output devices on a substrate of the same game device.

## Claims

1. A game device comprising:
a memory which stores information resources for an electronic game;
an input device which accepts an input for determining an operated object operated by a user and a behavior of the operated object in response to the user's operation;
an information receiving circuit which receives information on an operated object operated by a user other than the user as information on a non-operated object via communication;
sound effect generating means which generates sound effects based on the behavior of the operated object and of the non-operated object;
a loudspeaker which outputs the sound effects;
a display control circuit which performs a control of displaying the operated object and the non-operated object on a screen of the display device; and
an image processing circuit which generates image information for the electronic game on the basis of the information resources stored in the memory and displays the generated image information on the display device,
wherein the sound effect generating means generates a sound effect changed to have a different waveform from a waveform of the sound effect based on the behavior of the operated object as the sound effect based on the behavior of the non-operated object.

2. A game device according to claim 1, wherein the sound effect generating means generates a sound effect changed to have a different frequency as the sound effect changed to have the different waveform.

3. A game device according to claim 1, wherein the sound effect generating means generates a sound effect changed to have a different pitch as the sound effect changed to have the different waveform.

4. A game system having a plurality of game devices each including:
a memory which stores information resources for an electronic game;
an input device which accepts an input for determining an operated object operated by a user and a behavior of the operated object in response to the user's operation;
an information receiving circuit which receives information on an operated object operated by a user other than the user as information on a non-operated object via communication;
sound effect generating means which generates sound effects based on the behavior of the operated object and of the non-operated object;
a loudspeaker which outputs the sound effects;
a display control circuit which performs a control of displaying the operated object and the non-operated object on a screen of the display device; and
an image processing circuit which generates image information for the electronic game on the basis of the information resources stored in the memory and displays the generated image information on the display device,
wherein the sound effect generating means of each of the game devices generates a sound effect changed to have a different waveform from a waveform of the sound effect based on the behavior of the operated object as the sound effect based on the behavior of the non-operated object.

5. In a game system having a plurality of game devices each including:
a memory which stores information resources for an electronic game;
an input device which accepts an input for determining an operated object operated by a user and a behavior of the operated object in response to the user's operation;
an information receiving circuit which receives information on an operated object operated by a user other than the user as information on a non-operated object via communication;
sound effect generating means which generates sound effects based on the behavior of the operated object and of the non-operated object;
a loudspeaker which outputs the sound effects;
a display control circuit which performs a control of displaying the operated object and the non-operated object on a screen of the display device; and
an image processing circuit which generates image information for the electronic game on the basis of the information resources stored in the memory and displays the generated image information on the display device, with functions of the game devices set by function setting means,
a method of generating a sound effect of the game system,
wherein the function setting means performs a process of setting one of the plurality of game devices to be a master device and setting other game devices to be slave devices, wherein the sound effect generating means of the game device set to be the master device performs a process of generating a sound effect unmodulated with respect to a reference sound as a sound effect of the operated object operated by a user who operates the game device and a process of generating a sound effect modulated with respect to the reference sound as a sound effect of the non-operated object transmitted from the game device set to be the slave device, and wherein the sound effect generating means of the game device set to be the slave device performs a process of generating a sound effect unmodulated with respect to the reference sound as the sound effect of the operated object operated by the user who operates the game device and a process of generating a sound effect modulated with respect to the reference sound as the sound effect of the non-operated object transmitted from the game device set to be the master device or one of other game devices set to be the slave devices.

6. A program for causing a computer to perform the processes according to claim 5.

7. A computer-readable storage medium which records a program according to claim 6.

8. A method according to claim 5, wherein the non-operated object is an object operated by another player and/or an object operated by a computer.

9. A method according to claim 5, wherein the sound effect generating means assigns identifiers different from each other to the operated object and the non-operated object, respectively, and compares the identifiers with an identifier assigned to the game device: if they match, the sound effect generating means generates a sound effect serving as a reference, or if not, the sound effect generating means generates a sound effect changed to have a different waveform from a waveform of the reference sound.

## Amended claims

### Amended claims under Art. 19.1 PCT

**1.** (Amended)
A game device used in a game system having a structure in which a plurality of the game devices are connected to each other via communication means, the game system being **characterized in that**:
an electronic game intended for a plurality of players is implemented;
the plurality of game devices share a plurality of objects in the electronic game;
two types of objects are provided for the game devices: an operated object that can be operated by the game device concerned and a non-operated object operated by another game device, but cannot be operated by the game device concerned;
device identifiers assigned to the plurality of game devices are different from each other;
an object identifier is assigned to each of the plurality of objects on the basis of the device identifier; and
each of the game devices changes a sound effect generated when operating the object on the basis of the object identifier,
the game device comprising:
a memory which stores information resources for an electronic game;
an input device which accepts an input for determining an operated object operated by a user and a behavior of the operated object in response to the user's operation;
an information receiving circuit which receives information on an operated object operated by a user other than the user as information on the non-operated object via communication;
sound effect generating means which generates sound effects based on the behavior of the operated object and of the non-operated object;
a display control circuit which performs a control for displaying the operated object and the non-operated object on a screen of the display device; and
an image processing circuit which generates image information for the electronic game on the basis of the information resources stored in the memory and displays the generated image information on the display device,
wherein the sound effect generating means determines whether to change the sound effect for the object on the basis of the object identifier and sets the sound effect based on the behavior of the non-operated object to a sound effect different from the sound effect based on the behavior of the operated object.

**2.** (Amended)
A game device according to claim 1, wherein the sound effect generating means obtains the object identifier of the object for which the sound effect is generated, obtains the device identifier of the game device which should output the object identifier and the sound effect, and changes the sound effect of the object on the basis of whether the object identifier matches the device identifier.

**3.** (Amended)
A game device according to claim 1, wherein the sound effect generating means is means for changing a frequency of the sound effect and/or means for changing a pitch of a sound waveform of the sound effect as means for changing the sound effect.

**4.** (Amended)
A game system having a structure in which a plurality of game devices are connected to each other via communication means, wherein:
an electronic game intended for a plurality of players is implemented;
the plurality of game devices share a plurality of objects in the electronic game;
two types of objects are provided for the game devices: an operated object that can be operated by the game device concerned and a non-operated object operated by another game device, but cannot be operated by the game device concerned;
device identifiers assigned to the plurality of game devices are different from each other;
an object identifier is assigned to each of the plurality of objects on the basis of the device identifier;
each of the plurality of game devices changes a sound effect generated when operating the object on the basis of the object identifier;
each of the plurality of game devices includes sound effect generating means; and
the sound effect generating means determines whether to change the sound effect for the object on the basis of the object identifier and sets the sound effect based on the behavior of the non-operated object to a sound effect different from the sound effect based on the behavior of the operated object.

**5.** (Amended)
A game system having a plurality of game devices and setting functions of each of the plurality of game devices by using function setting means, the game device including:
a memory which stores information resources for an electronic game;
an input device which accepts an input for determining an operated object operated by a user and a behavior of the operated object in response to the user's operation;
an information receiving circuit which receives information on an operated object operated by a user other than the user as information on the non-operated object via communication;
sound effect generating means which generates sound effects based on the behavior of the operated object and of the non-operated object;
a display control circuit which performs a control of displaying the operated object and the non-operated object on a screen of the display device; and
an image processing circuit which generates image information for the electronic game on the basis of the information resources stored in the memory and displays the generated image information on the display device,
wherein the function setting means performs a process of setting one of the plurality of game devices to be a master device and setting other game devices to be slave devices, wherein the sound effect generating means of the game device set to be the master device performs a process of generating a sound effect unmodulated with respect to a reference sound as a sound effect of the operated object operated by a user who operates the game device and a process of generating a sound effect modulated with respect to the reference sound as a sound effect of the non-operated object transmitted from the game device set to be the slave device, and wherein the sound effect generating means of the game device set to be the slave device performs a process of generating a sound effect unmodulated with respect to the reference sound as the sound effect of the operated object operated by the user who operates the game device and a process of generating a sound effect modulated with respect to the reference sound as the sound effect of the non-operated object transmitted from the game device set to be the master device or one of other game devices set to be the slave devices.

**6.** (Amended)
A method of generating sound effects for objects in a game system having a structure in which a plurality of the game devices are connected to each other via communication means, the game system being **characterized in that**:
an electronic game intended for a plurality of players is implemented;
the plurality of game devices share a plurality of objects in the electronic game;
two types of objects are provided for the game devices: an operated object that can be operated by the game device concerned and a non-operated object operated by another game device, but cannot be operated by the game device concerned;
device identifiers assigned to the plurality of game devices are different from each other;
an object identifier is assigned to each of the plurality of objects on the basis of the device identifier; and
each of the game devices changes a sound effect generated when operating the object on the basis of the object identifier,
wherein the plurality of game devices each include sound effect generating means for generating the sound effects,
the method comprising the steps of:
setting one of the plurality of game devices to be a master device and setting other game devices to be slave devices;
generating a sound effect unmodulated with respect to a reference sound as a sound effect of the operated object operated by a user who operates the game device using the sound effect generating means of the game device set to be the master device;
generating a sound effect modulated with respect to the reference sound as a sound effect of the non-operated object transmitted from the game device set to be the slave device;
generating a sound effect unmodulated with respect to the reference sound as the sound effect of the operated object operated by the user who operates the game device using the sound effect generating means of the game device set to be the slave device; and
generating a sound effect modulated with respect to the reference sound as the sound effect of the non-operated object transmitted from the game device set to be the master device or one of other game devices set to be the slave devices.

**7.** (Amended)
A program for causing a computer to perform the processes according to claim 6.

**8.** (Amended)
A computer-readable storage medium which stores the program according to claim 7.

**9.** (Amended)
A method of generating sound effects according to claim 6, wherein the non-operated object is an object operated by another player and/or operated by a computer.

**10.** (Added)
A method of generating sound effects according to claim 6, wherein the sound effect generating means assigns identifiers different from each other to the operated object and the non-operated object, respectively, and compares the identifier with an identifier assigned to the game device, thereby generating a sound effect serving as a reference if they match, or if not, generating a sound effect changed to have a different waveform from that of the reference sound.
